# EUROPEAN PATENT SPECIFICATION

(11) **EP 0 853 131 B1**
(45) Date of publication and mention of the grant of the patent: **10.05.2006**
(21) Application number: 97830586.0
(22) Date of filing: 11.11.1997
(51) Int. Cl.: C22B 9/00, B22D 1/00, C21C 5/52, F27B 14/06, B22D 41/01

(54) **PROCESS AND PLANT FOR INDUCTION MELTING AND PURIFICATION OF ALUMINIUM, COPER, BRASS, LEAD AND BRONZE ALLOYS**
VERFAHREN UND VORRICHTUNG ZUM INDUKTIVEN SCHMELZEN UND AFFINIEREN VON ALUMINIUM, KUPFER, MESSING, BLEI, BRONZE UND DEREN LEGIERUNGEN
PROCEDE ET DISPOSITIF POUR LA FUSION ET L'AFFINAGE PAR INDUCTION DE L'ALUMINIUM, DU CUIVRE, DU LAITON, DU PLOMB, DU BRONZE ET LEURS ALLIAGES

(30) Priority: 15.11.1996 IT TS960011
(43) Date of publication of application: 15.07.1998
(73) Proprietor: S.E.TRI. S.r.l., 38017 Mezzolombardo (TN) (IT)
(72) Inventor: Gasperetti, Bruno, 65195 Wiesbaden (DE); Kolesnichenko, Anatolj, 253147 Kiev (UA)

(56) References cited:
- EP-A- 0 006 306
- EP-A- 0 252 308
- EP-A- 0 397 486
- DE-A- 2 406 480
- FR-A- 2 672 620
- US-A- 3 764 305
- US-A- 4 512 801
- US-A- 4 867 786

## Description

### Technical field

The present invention relates to the apparatuses and methods in the metallurgical field and especially in the field of electromagnetic melting and purification of aluminium, copper, brass, lead and bronze alloys before next treatments foreseen for different purposes. These materials will be hereinafter defined as metals.

### Background art

Magnetic induction crucible furnaces for heating and melting of metallic raw material by an alternate magnetic field are well-known.

The known induction furnaces from the start-up phases permit to use solid raw material, but they must be supplied by a high-frequency electrical energy and special power sources are necessary for the compensation of a high reactance. The electrical effectiveness of such furnaces is consequently low.

The induction channel furnaces have a high power efficiency, but during the start-up phases they need only liquid metal to fill all the space, where a Joule heat shares out. Therefore a channel induction furnace cannot be stopped during all the period of operation. Furthermore, an induction channel furnace undergoes on the inner walls a block of oxides and inter-metallic materials as an effect of the opposition to the current induced in the magnetic field of the inductor. Many methods of mechanical cleaning of induction channels are not effective, are too expensive and, most important, lead to great losses because of the interruption of the main melting process.

Both these kinds of furnace do not provide any purification of molten metal during or after melting. They do not even give any possibility to discharge the molten metal with no declination of the furnace; this action can break the refractory of the plant. Only the magneto-dynamic pump, described in the Patent of Prof. V. Polishchuk (USSR N° 176.184) permits to pump the treated metal out, but this pump had been designed like a induction channel furnace and can be as much polluted as a furnace by the melting process of metallic alloys.

The conventional magnetic induction furnaces are not equipped to purify the molten metal during or after melting; a next purification through mechanical stirring and addition of chemical components containing thorium and chlorine, causing a further pollution of the environment, is therefore necessary.

Patent Application No. EP-A-0 397 486 describes an apparatus of removing non-metallic inclusions from a molten metal by allowing the molten metal to pass through at least first and a second vessel, which are intermediate between a ladle and a mold.

The first vessel is surrounded by a rotational magnetic field generating device for centrifugation of the molten metal The second vessel is provided with a heating device for heating the molten metal received therein.

It is not therefore known any single apparatus able to heating, melting of raw material, purification and degassing of molten metal and extraction of molten metal to a next treatment.

### Disclosure of invention

Purpose of the present invention is to overcome the disadvantages inherent with the use of the known induction furnaces, through a process which assures, by magnetic stirring, both melting and purification of the metal.

Another purpose is to realise a magnetic induction plant which can exploit this process.

These and other purposes can be obtained by the method for melting and purification of aluminium, copper, brass, lead and bronze alloys, object of the present invention, as defined in claim 10 which consists of the following stages:
- charging of cold solid metallic raw material (scraps and ingots) inside a crucible;
- electromagnetic induction heating and melting of metallic raw material inside the crucible inside a three-phase magnetic system by a horizontal travelling or pulsed magnetic field and creation of a turbulent flux inside the melt;
- whirling stirring of melt by electromagnetic induction and purification of it with extraction of hydrogen, of metallic and other non-electroconductive inclusions by coagulation of them in agglomerates of as great sizes as to be effectively filtered;
- discharging of purified melt by a magneto-hydrodynamic pump for next treatments or technological actions such as the continuous or periodical casting through a spray ceramic or fibre glass or carbon filter for mechanical filtration of the above mentioned agglomerates inside the molten metal.

For the implementation of this process a plant according to claim 1 is used. The plant may comprise two preferably identical magnetic induction apparatuses, one for heating and melting of raw material and pumping of molten metal inside the second apparatus, which is used for purification and degassing of molten metal and transfer of it to a next treatment (continuous or periodical casting).

Each of the above mentioned apparatuses is essentially compound by:
- a pot or crucible;
- a properly configured electromagnetic apparatus;
- a filter;
- a power supply.

Each crucible is surrounded in the lower part by a hollow permanent magnet where inside couples of horizontally arranged electromagnets are present and consisting in coils of electric wires which wind up cores consisting in blocks preferably rectangular and made of ferromagnetic material. These three couples of electromagnets are arranged in opposition and adjacent to the crucibles; inside the above mentioned electromagnets the poles of the magnetic field, induced by the electromagnets, are present.

The shape of the ferromagnetic cores of the opposed electromagnets is such that the magnetic gap decreases from the top to the bottom. The shape of the profile of the lower part of the crucibles repeats that of the above mentioned cores and has therefore a "V", "U" or intermediate shapes.

The crucible of the melting apparatus is equipped with an outlet pipe made of electro-conductive material for the discharge and transport of the molten metal inside the crucible of the second apparatus. The inlet of this pipe is preferably located near an extremity of the base of the crucible.

The second crucible is also equipped with an outlet pipe, made of electro-conductive material, to supply the necessary systems for the next treatment (casting). Even in this case the inlet of this pipe is preferably located near an extremity of the base of the crucible.

Such pipes can be even realised using non-electroconductive material. Their inlet can be located in any point of the crucibles but positioning, as above mentioned, in proximity of an extremity of the base the maximum effectiveness during transport of the material can be obtained as the metal flows into the pipes at the maximum possible speed.

The connections of the coils to the three-phase electrical net can be star or triangle.

The above mentioned couples of coils create a primary travelling magnetic field both inside the melting apparatus and inside the purification one. The magnetic field induces eddy currents inside the raw material of such intensity that this material is melted and/or kept at constant temperature.

Furthermore, this primary magnetic field induces material fluxes inside the crucibles. The differences between the different kinds of flux (number of vortexes and intensity) during melting or purification are obtained operating simultaneously on the following parameters: the level of the electric power and the different combinations of the connections of the coils to the three-phase system.

If the primary magnetic field is created exploiting the maximum electric power and connecting each couple of coils to a different phase of the AC (alternate current) net only a whirling flux is generated and this winds up all the space of the molten metal inside the crucible. Connecting all the couples of coils to the same phase of the net and exploiting a lower power a certain number of whirling fluxes is generated inside the liquid metal.

Stirring in this way the mass, the solid inclusions absorb on their surface the hydrogen dissolved inside the molten metal; the sizes of the agglomerates increase as much as it is possible to extract them through filters during the discharge of the molten metal from the second crucible.

The magnetic field is also used for the discharge of the material from each crucible.

The primary magnetic field in all the cases is concentrated in the lower part of the magnetic gap where the distance between the poles is small.

The travelling magnetic field is therefore used, according to the present process, for melting of liquid metal and of raw material, during the process of melting or re-melting, for intense stirring of it and, at the end, for pumping of molten metal from the first crucible to the second and from this outside.

For the implementation of the present process, as an alternative, a plant with only a crucible can be used, where inside both melting and purification of the metal occur, or more crucibles, of equal or different volumes.

The induction melting crucible can even have only two couples of electromagnets. In this case a less effectiveness in terms of ratio between supplied and utilised electric power results. On the other hand, for the purification apparatus a number of electromagnets equal to a multiple of three can be foreseen.

The surface of the electromagnetic cores of the opposite electromagnets can even be perfectly vertical; the shape of the profile of the lower part of the crucible, being similar to those of the poles, will be in this case vertical.

The effectiveness of the above mentioned apparatuses is reduced.

The crucibles can be equipped with airtight covers in order to keep in vacuum the inner environment. These covers are properly connected to a common apparatus for vacuum treatments inside the crucibles.

Even the pipe for the transfer of molten metal from one crucible to the other can be equipped with a filter at one of the extremities.

The present process permits to utilise only one plant both for melting and purification of metals. Such processes can be stopped and re-started at any moment.

Only operating on the electrical connections it is possible to pilot the plant for the implementation of a different function: melting, purification, transport, discharge.

Treatments with use of chemical pollutant agents are no longer necessary for purification.

The total power supplied to the system during melting is almost half of that supplied to other known induction melting plants. This is due to the particular configuration of the system (presence of electromagnets only in the lower part of the crucible and the particular "V" configuration of the crucible) and to the fact that the already melted material is being stirred in order to wash off the still solid raw material, thus easing the process of melting.

The electrical power supplied during purification is 10% of the maximum nominal value. Usually during purification according to the known existing processes a high waste of power results as a consequence of the fact that the material must be melted again or kept at a high temperature.

The purified molten metal is discharged with no declination of the crucible, drastically reducing the dangers due to the transfer of molten metal; furthermore, problems of breaking of the refractory of the crucible are not present.

### Brief description of the drawings

Further characteristics and advantages of the invention can be seen more from the description of two, preferred and not exclusive, forms of execution of the plant exploiting the present process, shown for approximate and not limiting purpose in the united drawings, where:

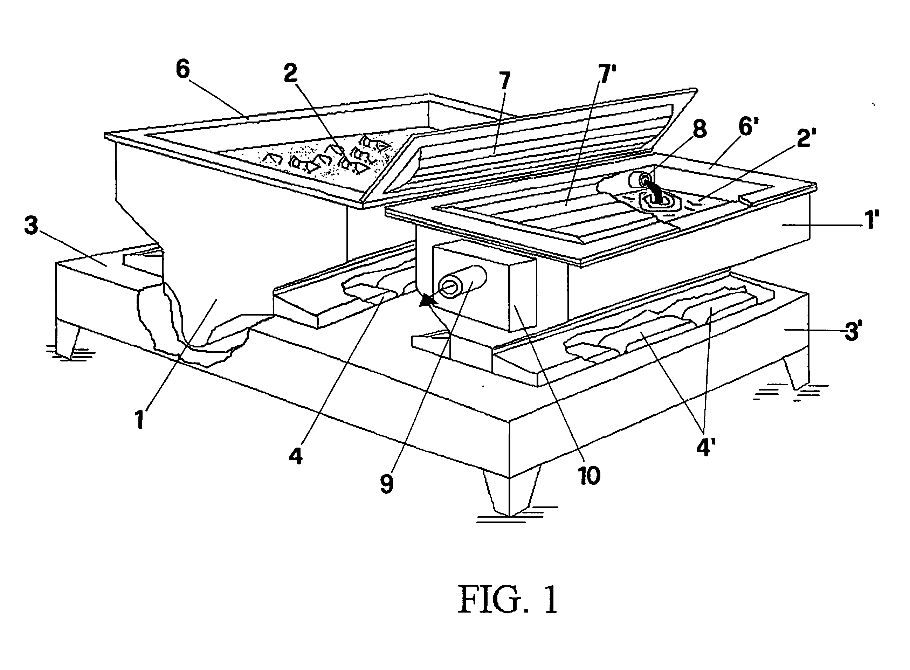

- figure 1 shows a perspective view of plant with two crucibles;

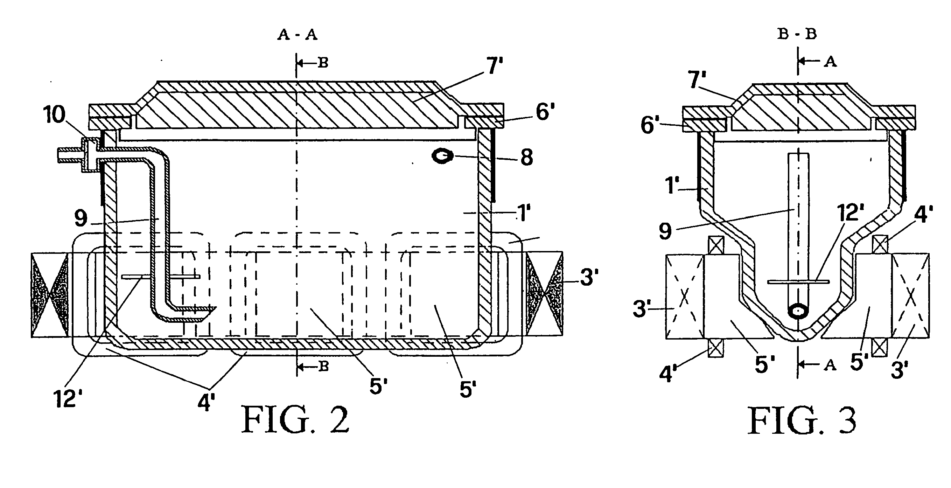

- figure 2 shows the longitudinal section of the purification crucible and of the relative electromagnetic apparatus;
- figure 3 shows the transversal section of the same crucible of figure 2;

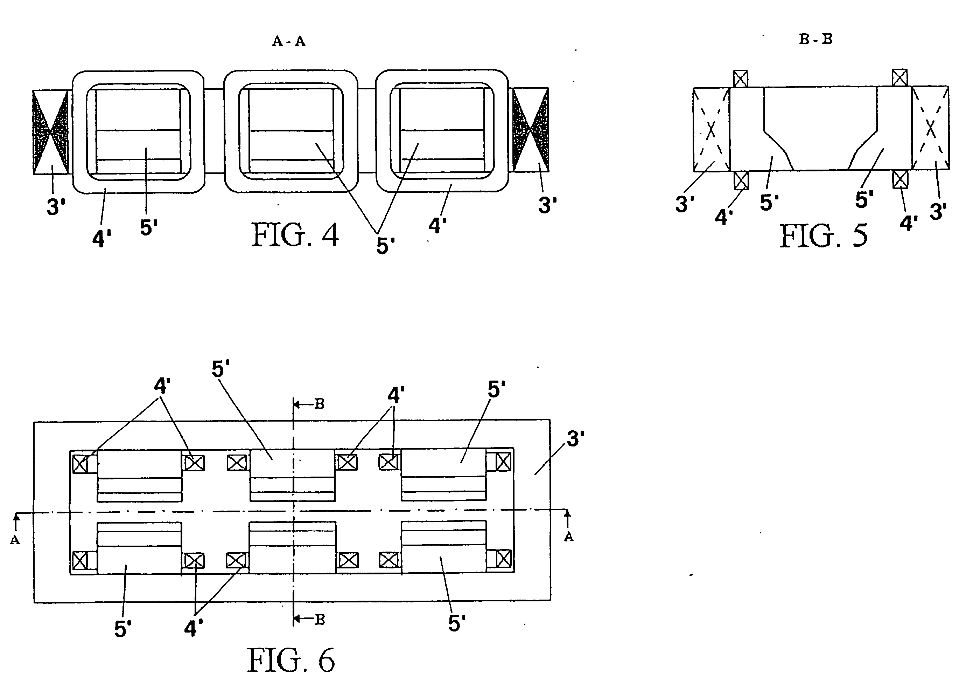

- figures 4 and 5 represent, respectively, the longitudinal and the transversal section of the above mentioned electromagnetic apparatus;
- figure 6 shows an upper view of the same electromagnetic apparatus;

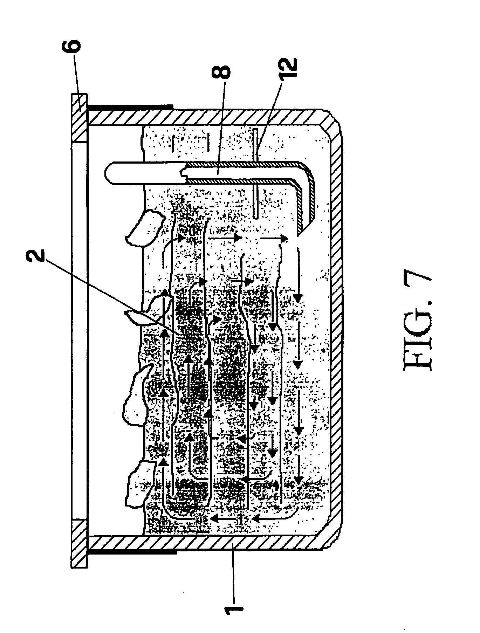

- figure 7 shows the scheme of the raw material stirring through the travelling magnetic field during melting;

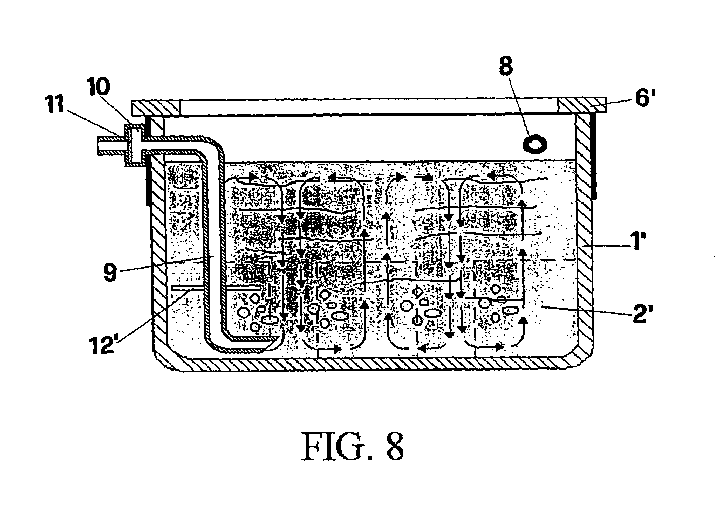

- figure 8 shows the scheme of the vortexes generated inside the liquid metal during purification which permit the coagulation of the particles and the extraction of hydrogen;
- figures 9, 10 and 11 show the scheme of the coagulation of particles;

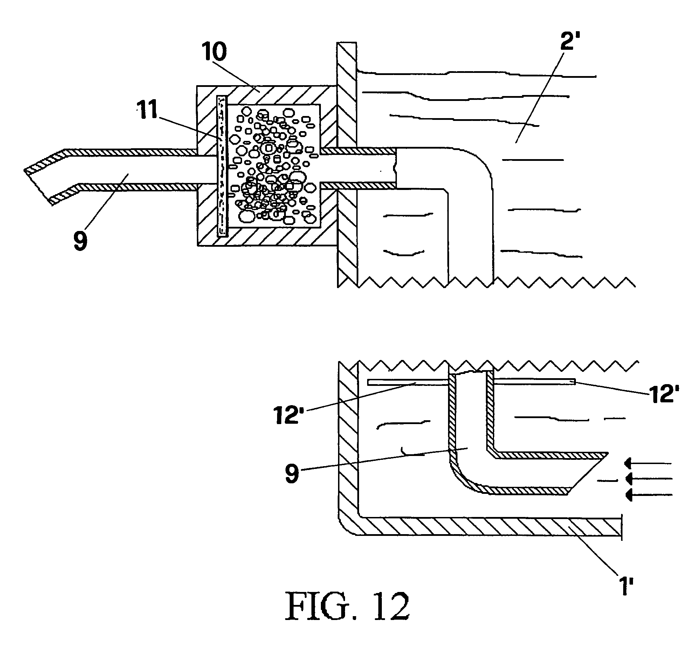

- figure 12 shows a longitudinal section of the outlet pipe discharging the molten metal from the purification crucible where the device for filtration of grown particles is evident;

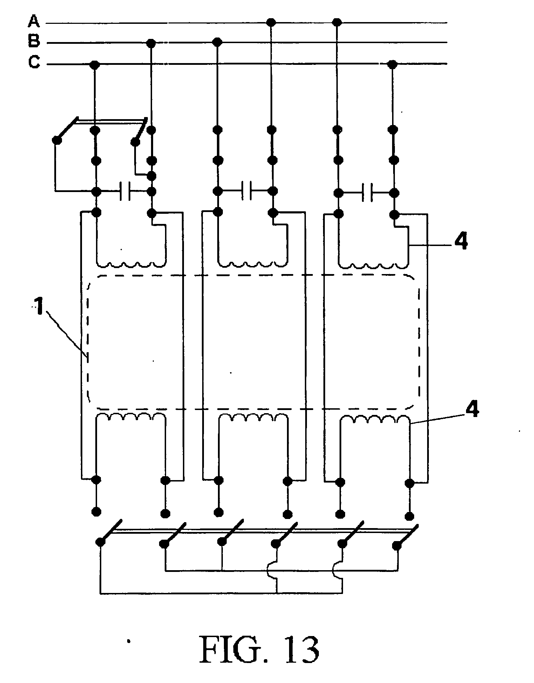

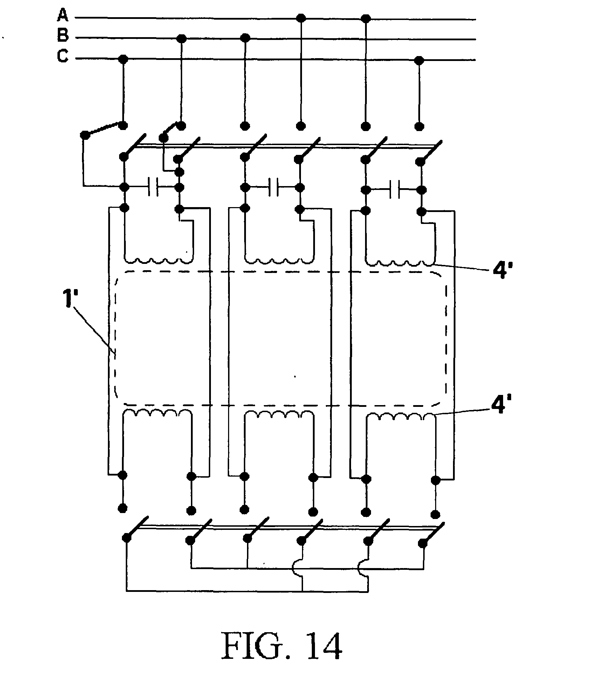

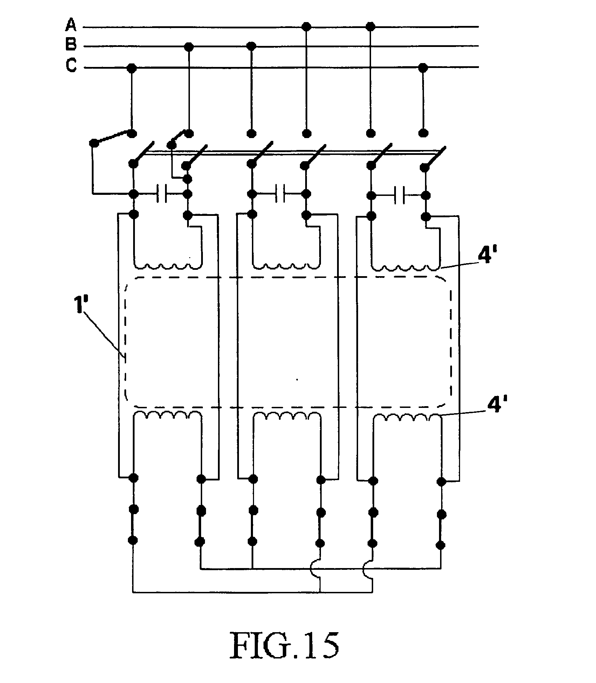

- figures 13, 14 and 15 represent the electrical schemes of the apparatuses during, respectively, melting, discharge and purification;
- figure 16 shows the perspective view of a plant with one crucible.

### Mode for carrying out the invention

More in particular, the present process is implemented through a plant equipped with two ceramic crucibles 1, 1', one only for melting of raw material 2 and the second for purification of molten metal 2'.

Each of these crucibles 1, 1' is surrounded at its base by a hollow permanent magnet 3, 3' where inside three couples of electromagnets realised by coils 4, 4' of electric wires (enclosed by an envelop of insulator) winding cores consisting in rectangular blocks 5, 5' of ferromagnetic material, e. g. iron, are present. The three couples of electromagnets are arranged in opposition; inside the electromagnets the poles of the magnetic field, induced by the electromagnets themselves, are present. The rectangular blocks 5, 5' are smoothed in such a manner that the gap decreases from the top to the bottom.

The coils 4, 4' operating independently, are connected to a three phase AC (alternate current) electric net in different ways.

The magnetic flux flows through the gap between the couples of poles and closes through the rectangular circuits passing through the hollow permanent magnets 3, 3'.

The shape of the profile of the lower part of crucibles 1, 1' repeats that of the rectangular blocks 5, 5'.

The upper edges of the ceramic crucibles 1, 1' are surrounded by a border 6, 6' which is connected to the walls of crucibles 1, 1' by ceramic glue.

The melting crucible 1 and the purification crucible 1' are closed by covers 7, 7'; both covers 7, 7' are airtight to keep in vacuum the inner environment.

An outlet pipe 8 connects, passing through the lateral walls, crucibles 1, 1'; a second outlet pipe 9, still passing through a lateral wall, permits to move away the purified metal from crucible 1'. The outlet pipe 9 has, furthermore, at its external extremity, a box 10 containing the changeable ceramic or fibre filters 11 for filtering the coagulated particles.

The outlet pipes 8, 9 are made of a non-electroconductive material. The inlet of both pipes are located near one extremity of the bases of crucibles 1, 1'. In proximity of the inlet of the outlet pipes 8, 9 funnel conveyors (e. g. simple laminas) 12, 12' of the molten metal are present.

The outlet pipes 8, 9 are airtight engaged inside the walls of crucibles 1, 1'. The extremities of the outlet pipes 8, 9 and those of the their conveyors 12, 12' do not contact the base of crucibles 1, 1'; as a consequence between these parts and the lower part of each crucible 1, 1' a space is present.

The process of melting and purification of metal occurs as in the following explanation.

The melting crucible 1 is charged with raw material 2 (ingots or metallic scraps). An alternate current supplies the couples of coils 4. At a first moment each couple of coils 4 is connected to a different phase (A, B and C) of the three-phase power supply.

The electromagnets generate a travelling primary horizontal magnetic field, horizontally arranged between the couples of poles of ferromagnetic material.

This field induces eddy currents inside the raw material thus creating a Joule heating and electromechanical forces (or Lorenz forces) producing a magneto-hydrodynamic flux with transfer of mass inside crucible 1.

The Joule heat generated by these currents is of as much intensity as to heat the raw material up to the melting temperature thus transforming it in liquid. As the electromagnets are arranged in the lower part of crucible 1 the density and the action force of the currents are much higher in this zone and therefore, with the decreasing downwards of the gap, the molten metal is at the beginning all in the lower part of crucible 1.

The travelling magnetic field induces the movement of the molten metal; the melt wash off the solid raw material at the top and, as a heating element, improves the melting process. Thus lower electrical powers can be supplied.

As described before, the magnetic field creates a magneto-hydrodynamic flux inside the molten metal. This occurs by the interaction between the primary magnetic field and the eddy currents inside the pieces of raw material and the molten metal, as a consequence of the presence of the electromagnetic forces. These forces generate a whirling flux winding all the space of the molten metal inside crucible 1 and permitting the movement of pieces of raw material or the flow of the melt inside crucible 1. The travelling magnetic field is therefore used both for melting and intensively stirring the liquid metal and the raw material during the melting process.

The electric power inside the coils during the phases of heating and melting of raw material is maximum (100%) in order to generate through the eddy currents the heat necessary for melting.

After the completion of melting of all the raw material inside crucible 1, to implement the next stage of discharging and transferring of molten metal inside the second crucible 1' only a couple 4 of coils of the melting crucible 1 is connected to a single phase of the three-phase voltage system (whereas the other two phases are not electrically connected) but in order to overturn the movement of the magnetic field thus reversing the movement of the molten metal.

The molten metal, enveloped by the travelling magnetic field, is pushed towards the funnel conveyor 12 of the outlet pipe 8. Conveyor 12 and that 12' of pipe 9 have two functions: to enhance the inlet surface of pipes 8, 9 and to increase the turbulence around their inlet and inside the space between the conveyors 12, 12' and the bottom of crucibles 1, 1'. Increasing the turbulence the viscosity decreases and the material can easier flow into pipes 8, 9.

The molten metal, pushed by the. Lorenz forces, is therefore obliged to flow into pipe 8 up to its outlet and is then pumped into the purification crucible 1'. The travelling magnetic field is therefore used to transfer the molten metal outside crucible 1.

After discharging, crucible 1 is ready to receive the next charge of raw material.

When the molten metal is inside crucible 1' all the couples of coils 4' surrounding it are connected to the same voltage phase (single phase supply). The lateral couples of coils 4' are connected with the same polarity (in parallel) whereas the central couple of coils 4' is connected in phase opposition with respect to the lateral couples.

The electromagnets generate a primary horizontal travelling magnetic field, horizontally arranged between the three couples of poles of ferromagnetic material.

Even in this case the magnetic field induces eddy currents inside the raw material, thus causing a Joule heating. The Joule heat, generated by these currents, is of as much intensity as to only compensate the heat losses towards the environment and to keep the metal in the liquid state. The current inside the coils 4' can be therefore reduced to 10% with respect to the melting phase. The value of voltage must be anyway high enough to create the above mentioned whirling fluxes inside the molten metal.

The magnetic field even produces, in the same way as mentioned before, magneto-hydrodynamic fluxes (with transfer of mass) inside the molten metal through the interaction of the primary magnetic field and the eddy currents inside the molten metal, as a result of the electromagnetic forces (or Lorenz forces).

But, as a result of the particular connection in this case three circuits of current inside the molten metal are generated: around the magnetic flux generated by each couple of poles. They cause the creation of four (for values of current lower than 10 A) or six (for values greater than 20 A) vortexes inside the molten metal as a consequence of the process of separation and coagulation of inclusions inside the molten metal described as follows.

As the electromagnets are arranged in the lower part of crucible 1', the density of the magnetic flux, of the eddy currents and of the electromagnetic forces increases from the top to the bottom of crucible 1'.

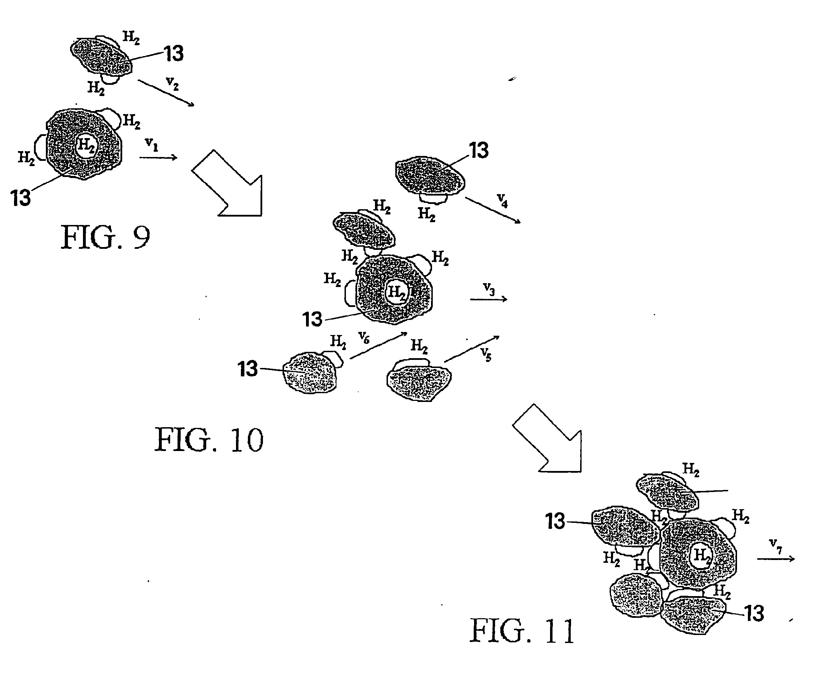

The process of coagulation and separation of inclusions is very strong, stronger than the simple magneto-hydrodynamic separation. Particles 13 of different non-electroconductive solid inclusions (particles of oxides, inter-metallic materials, etc.) move into the molten metal through the action of the above described electromagnetic forces; these forces depend on the volume and on the cross section of particles 13. As a result the particles 13 move at different speeds (indicated as vₓ in figures 9, 10 and 11), even if submitted to the same electromagnetic forces, and, therefore, collisions between them are possible.

The solid particles 13 absorb on their surface the gases dissolved inside the molten metal, in particular hydrogen (H₂), as small bubbles. While the particles 13 flow in whirls they collide one to other; the contact of the different particles 13 with hydrogen bubbles, present on the surface, induces very strong capillary forces which cause the joining of particles 13 in agglomerates. This joining of particles 13 is a irreversible process and the increase of the sizes of particles 13 occurs spontaneously.

The intensity of the collision of particles 13 increases as the different speeds of particles 13 increase on their hand. The coagulation process continues headlong. The increase intensity of the mass of the joining particles 13 is proportional to the fifth power of the size of particles 13. The sizes of the agglomerates, thus formed, depend on the time of treatment: after some minutes the size of the agglomerates increases up to 2-4 mm. The quantity of the smaller particles 13 decreases as a consequence of the absorption of them by the greater particles.

After some minutes of coagulation treatment vacuum can be created inside the two crucibles 1, 1' apart from the eventual prosecution of melting inside crucible 1. The vacuum treatment is not compulsory but in the case when particular specifications for the molten metal are required.

The discharge of purified metal 2' from the second crucible 1' to the next plant as the continuous casting is realised connecting only one couple of coils 4' of crucible 1' to a single phase of the three-phase voltage system. The total pressure (stimulation of the movement and magnetic components of pressure) during discharge increases up to the necessary level for the emptying of the molten metal 2'.

The molten metal, pushed by the Lorenz forces, is obliged therefore to flow into pipe 9 up to its outlet and is then pumped outside. The travelling magnetic field is therefore used to move the molten metal away from crucible 1'.

During the discharge the molten metal from crucible 1', the coagulated particles of oxides, of inter-metallic materials and of gases absorbed on the surface of particles 13 are extracted through the changeable ceramic or fibre filters 11 inside the box 10.

The so conceived plant, can be modified in different ways, all included inside the initial inventive concept. Furthermore all the parts can be substituted with others technically equivalent.

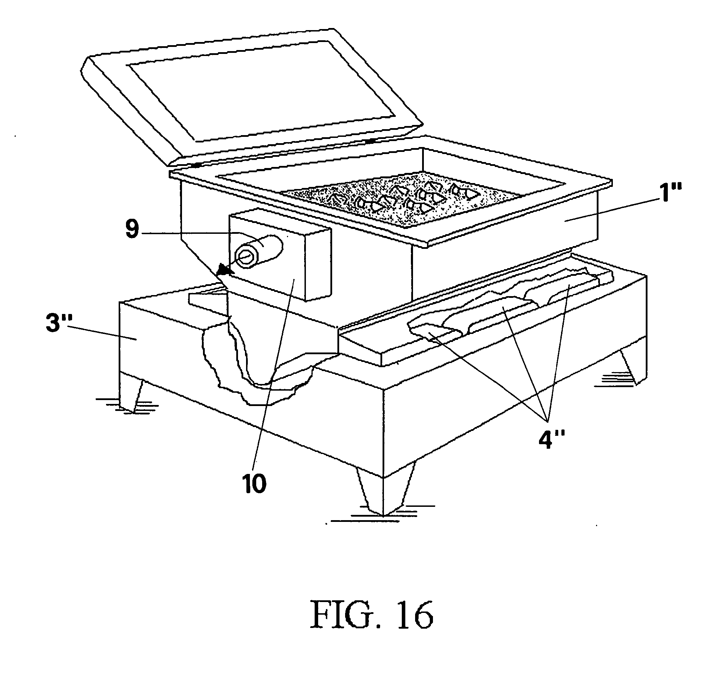

Among these variants the apparatus shown in figure 16 is pointed out, equipped with only one crucible 1" where inside both melting and purification of metal occur. This plant is similar to those previously described: presence of a hollow permanent magnet 3", of couples of electromagnets realised by coils 4", etc..

## Claims

1. Plant for melting and purification of aluminium, copper, brass, lead and bronze alloys, where this plant is able to heating, melting of raw material, purification and degassing of molten metal and extraction of molten metal to a next treatment; wherein the plant comprises a pot or crucible (1"), a properly configured electromagnetic apparatus, an outlet pipe (9), a box (10), a filter (11) and an electric power supply system; the above mentioned crucible (1") is surrounded in the lower part by a hollow permanent magnet (3") where inside three couples of horizontally spaced electromagnets are present and consisting in coils (4") of electric wire which wind up cores consisting in rectangular blocks (5") and made of ferromagnetic material; these couples of electromagnets are arranged in opposition and adjacent to the crucible (1"); inside the above mentioned electromagnets the poles of the magnetic field, which is induced by the electromagnets, are present; the magnetic flux flows through the magnetic gap between the couples of poles and closes through the rectangular circuits passing through the hollow permanent magnet (3"); the form of the ferromagnetic cores of the opposed electromagnets is such that the magnetic gap decreases from the top to the bottom; the above mentioned outlet pipe (9) is made of electro-conductive material for discharging of the molten metal (2'); the inlet of this pipe (9) is located near an extremity of the base of crucible (1"); at the extremity of the outlet pipe (9) of the plant a box (10) is present with inside a replaceable ceramic or fibre filter (11) for filtering coagulated inclusions; a funnel conveyor (12") is present next to the inlet of the outlet pipe (9); the crucible (1") is closed by a cover (7'); the coils (4") operate independently and are connected to a three-phase alternate current electric net in variable ways.

2. Plant, according to claim 1, **characterized by** the fact that the bottom part of crucible (1") has a "V" shape.

3. Plant, according to claim 1, **characterized by** the fact that the bottom part of crucible (1") has a "U" or intermediate shape.

4. Plant, according to claim 1, **characterized by** the fact that the bottom part of crucible (1") has an intermediate shape between a "U" and a "V" shape.

5. Plant, according to claim 1, **characterized by** the fact that the magnetic induction apparatus has only two couples of electromagnets.

6. Plant, according to claim 1, **characterized by** the fact that the magnetic induction apparatus has a number of electromagnets equal to a multiple of three.

7. Plant, according to claim 1, **characterized by** the fact that crucible (1") is equipped with airtight cover (7') connected to an apparatus for creating vacuum inside crucible (1").

8. Plant, according to claim 1, **characterized by** the fact that the pipe (9) is made of non- conductive material.

9. Plant, according to claim 1, **characterized by** the fact that the inlet of this pipe (9) is located at any point of crucible (1 ").

10. Process for melting and purification of aluminium, copper, brass, lead and bronze alloys using the plant according to the previous claims, which consists of the following phases:
- charging of cold metallic and solid raw material (2) (junks and ingots) into crucible (1) of the melting apparatus;
- electromagnetic induction heating and melting of the solid raw material (2) inside crucible (1") inside a three-phase magnetic system; the above mentioned electromagnets generates a primary travelling horizontal magnetic field, horizontally located between the three couples of poles of ferromagnetic material; this magnetic field induces eddy currents inside the raw material creating a Joule heating which heats the raw material up to the melting temperature and electromagnetic forces, which produce a whirling magneto-hydrodynamic flux winding up the molten metal space inside crucible (1") and permitting the movement of pieces of raw material or the flowing of molten metal inside crucible (1"); melting of raw material (2) and creation of a single flux is possible connecting each couple of coils (4") to a different phase (A, B and C) of the three-phase power supply, using the maximum electric power;
- whirling agitation of molten metal (2') by electromagnetic induction and simultaneous purification of molten metal (2'); the above mentioned electromagnets generate a primary travelling horizontal magnetic field, horizontally arranged between the couples of poles of ferromagnetic material, which induces eddy currents inside the raw material creating a Joule heating as much intensive as to supply only a compensation of waste heat in the environment and to keep the metal in the liquid state and magneto-hydrodynamic fluxes by transfer of mass inside molten metal (2') through electromagnetic forces; as all the couples of coils (4") surrounding crucible (1") are connected to the same phase of voltage (one-phase power supply) but with different polarity, various current circuits are created inside the liquid metal around the magnetic flux generated by each couple of poles which cause the generation of more vortexes inside molten metal (2'); this magneto-hydrodynamic agitation causes the turbulent movement of dissolved hydrogen, of particles of oxides, of inter-metallic materials and of other non-electroconductive inclusions inside molten metal (2'); these inclusions move at different speeds as they depend on forces on their turn dependent on the volume and the cross section of inclusions and therefore impacts among themselves are possible; the solid particles (13) of inclusions absorb on their surface the gases that are dissolved inside the molten metal, especially hydrogen (H₂), like small bubbles; while the particles (13) flow whirling they impact one to the other; the contact of different particles (13) with bubbles of hydrogen on the surface induces very strong capillary forces which cause the joining of particles (13) in agglomerates; the sizes of these agglomerates depend on the treatment time;
- discharge of metal (2') from crucible (1") by a magneto-hydrodynamic pump for next treatments or technological actions like the continuous or periodical casting through the connection of at least a couple (4") of coils of crucible (1") to a single phase of the three-phase voltage system; molten metal (2'), pushed by the Lorenz forces, is obliged to flow into pipe (9) up to its outlet to be pumped out; during the flowing out of molten metal (2') from crucible (1") the agglomerates of coagulated particles of oxides (13), of inter-metallic materials and of gases which are absorbed on their surface are extracted by mechanical filtration through a spray ceramic or fibre glass or carbon wire filter (11).

## Patentansprüche

1. Vorrichtung zum induktiven Schmelzen und Affinieren von Aluminium-, Kupfer-, Messing- und Bronzelegierungen, wobei dieselbe Vorrichtung in der Lage ist Rohmaterial zu erhitzen und zu schmelzen, geschmolzenes Metall zu affinieren und zu entgasen, und geschmolzenes Metall für das darauf folgende Verfahren heraus zu gewinnen; die Vorrichtung besteht aus einem Tiegel bzw. Schmelzhafen (1"), einer ordnungsgemäß konfigurierten elektromagnetischen Vorrichtung, einem Ausfluss(9), einem Feld (10), einem Filter (11) und einem elektrischen Stromversorgungssystem; der obengenannte Schmelzhafen (1") ist in der unteren Seite von einem hohlen Dauermagneten umgeben (3") in dessen Inneren drei paar Elektromagneten in horizontalem Abstand beinhaltet sind, bestehend aus Spulen (4") von elektrischem Draht, welche Leiter hochziehen, nämlich rechteckige aus ferromagnetischem Material bestehende Blöcke (5'); diese Elektromagnetenpaare liegen gegensätzlich und angrenzend zum Schmelzhafen (1"); im Inneren der obengenannten Elektromagneten befinden sich die Pole des von den Elektromagneten induzierten Magnetfelds; der magnetische Fluss fließt durch den Magnetspalt zwischen den Polpaaren und schließt sich durch die rechteckigen Schaltsysteme, welche durch den hohlen Dauermagneten (3") laufen, ab. Die Form der ferromagnetischen Kerne der entgegen gesetzten Elektromagneten ist so gestaltet, dass sich der Magnetspalt von oben nach unten reduziert; der obengenannte Ausfluss (9) besteht aus elektrisch leitfähigem Material zur Entladung des geschmolzenen Metalls (2'); der Einlauf des Ausflusses (9) befindet sich gegen einem Ende der Schmelzhafenbasis (1"); am Ende des Ausflusses (9) der Vorrichtung befindet sich ein Feld (10), das in seinem Inneren einen ersetzbaren Keramik- bzw. Hohlfaserfilter (11) zum Filtern von hart gewordenen Entladungen beinhaltet; ein Horizontalförderer befindet sich beim Einlauf des Ausflusses (9) der Vorrichtung; der Schmelzhafen (1 ") schließt sich mittels einer Bedeckung (7'); die Spulen (4") funktionieren unabhängig voneinander und sind in verschiedenen Art und Weisen an ein Dreiphasenwechselstrom Elektronetz angeschlossen.

2. Vorrichtung laut Patentanspruch 1 charakterisiert **dadurch**, dass der Basisteil des Schmelzhafens (1 ") eine V - Form hat.

3. Vorrichtung laut Patentanspruch 1 charakterisiert **dadurch**, dass der Basisteil des Schmelzhafens (1 ") eine U - Form bzw. Zwischenform hat.

4. Vorrichtung laut Patentanspruch 1 charakterisiert **dadurch**, dass der Basisteil des Schmelzhafens (1") eine Zwischenform hat, die zwischen einer U - und einer V - Form ist.

5. Vorrichtung laut Patentanspruch 1 charakterisiert **dadurch**, dass das Apparat für die magnetische Induktion nur zwei Paar Elektromagneten besitzt.

6. Vorrichtung laut Patentanspruch 1 charakterisiert **dadurch**, dass das Apparat für die magnetische Induktion eine Anzahl von Elektromagneten besitzt, die einem Vielfachen von Drei entsprechen.

7. Vorrichtung laut Patentanspruch 1 charakterisiert **dadurch**, dass der Schmelzhafen (1") mit einer luftdichten Bedeckung (7) versehen ist, die mit einem Apparat angeschlossen ist, das einen luftleeren Raum im Schmelzhafeninneren (1") entwickelt.

8. Vorrichtung laut Patentanspruch 1 charakterisiert **dadurch**, dass der Ausfluss (9) aus nichtleitfähigem Material besteht.

9. Vorrichtung laut Patentanspruch 1 charakterisiert **dadurch**, dass der Einlauf dieses Ausflusses (9) an jedem Punkt des Schmelzhafens (1 ") befestigt ist.

10. Verfahren zum induktiven schmelzen und Affinieren von Aluminium, Kupfer, Messing, Blei, Bronze und deren Legierungen durch die Benutzung der Vorrichtung laut der obengenannten Patentansprüche, und zwar nach den nachstehenden Schritten:
- Laden von kaltem metallischen Materials und solidem Rohmaterials (2) (Schrotte und Brammen) im Schmelzhafen (1 ") der Schmelzvorrichtung;
- Elektromagnetische Induktion zum Erhitzen und Schmelzen des soliden Rohmaterials (2) im Schmelzhafeninneren (1") innerhalb eines dreiphasigen Magnetsystems; die obengenannten Elektromagneten erzeugen ein sich hauptsächlich bewegendes horizontales Magnetfeld, das sich horizontal zwischen den drei aus ferromagnetischem Material bestehenden Polpaaren befindet; dieses Magnetfeld induziert Wirbelströme im Rohmaterial, welche eine Jouleerhitzung erzeugen, die das Rohmaterial bis zur Schmelztemperatur erhitzt, und auch elektromagnetische Kräfte, die einen wirbelnden magneto-hydrodynamischen Fluss bewirken und das geschmolzene Metall im Schrüelzhafeninneren (1") hochziehen; somit ist die Bewegung der Rohmaterialstücke bzw. das Fließen von geschmolzenem Metall im Schmelzhafen (1") gestattet; das Schmelzen von Rohmaterial (2) und Entstehen eines Einzelflusses ist durch den Anschluss aller Spulenpaare (4") an einer verschiedenen Phase (A, B und C) der Dreiphasenstromversorgung möglich, und zwar indem die höchstmögliche Stromkraft benutzt wird;
- Wirbelerregung von geschmolzenem Metall (2') durch die elektromagnetische Induktion und gleichzeitige Affinierung des geschmolzenen Metalls (2); die obengenannten Elektromagneten erzeugen ein sich hauptsächlich bewegendes horizontales Magnetfeld, das horizontal zwischen den Polpaaren aus ferromagnetischem Material liegt und Wirbelströme im Rohmaterial induziert, somit eine Jouleerhitzung erzeugend, dessen Intensität ausschließlich eine Kompensation von Abwärme in der Umgebung liefert, was sowohl das Metall flüssig behält als auch die magnetisch-hydrodynamischen Flüsse durch Massentransfer im geschmolzenen Metall (2") durch elektromagnetische Kräfte; da alle Spulenpaare (4"), die den Schmelzhafen (1") umkreisen zur gleichen Voltphase angeschlossen sind (einphasige Stromversorgung), allerdings mit einer verschiedenen Polarität, werden verschiedene Stromkreise im flüssigen Metall erzeugt, und zwar um den magnetischen Fluss, der von jedem Polpaar erzeugt ist, das die Erzeugung mehrerer Wirbel im geschmolzenen Metall (2') verursacht; diese magneto-hydrodynamische Erregung verursacht die turbulente Bewegung von aufgelöstem Wasserstoff, von Oxydpartikeln, von intermetallischen Materialien und von elektrisch nichtleitfähigen Entladungen im geschmolzenen Metall (2'); diese Entladungen bewegen sich mit verschiedenen Geschwindigkeiten, weil sie von Kräften abhängen, die ihrerseits vom Volumen und Querschnitt der Entladungen abhängig sind, und deswegen sind Zusammenstöße unter ihnen möglich; die soliden Inklusionspartikeln (13) absorbieren auf ihrer Oberfläche die Gase, die sich im geschmolzenen Metall auflösen, vor allem Wasserstoff (H2), und zwar wie kleine Blasen; durch den Wirbel des Partikelflusses (13) stoßen sie gegeneinander; der Kontakt auf der Oberfläche zwischen den verschiedenen Partikeln (13) und den Wasserstoffblasen induziert sehr starke Kapillarkräfte, welche die Verbindung von Partikeln (13) in Agglomerate verursachen; die Größe dieser Agglomerate ist mit der Verfahrensdauer abhängig;
- Entladung vom Metall (2') aus dem Schmelzhafen (1") mittels einer magneto-hydrodynamischen Pumpe zwecks weiterer Verfahren oder technologischer Eingriffe, wie der kontinuierliche bzw. periodische Guss mittels der Verbindung von mindestens einem Spulenpaar (4") des Schmelzhafens (1") mit einer einzigen Phase des dreiphasigen Voltsystems; das von der Lorenz Kraft angetriebene geschmolzene Metall (2') ist gezwungen durch den Ausfluss (9) bis zum Auslasspunkt hoch zu fließen, um heraus gepumpt zu werden; während des Ausflusses von geschmolzenem Metall (2) aus dem Schmelzhafen (1 ") werden die Agglomerate von fest gewordenen Oxydpartikeln (13), intermetallischen Materialien und Gasen, die auf ihrer Oberfläche absorbiert werden, mittels mechanischer Filtrierung extrahiert, und zwar durch einen Filter (11) aus Spritzkeramik, Glasfaser oder Kohlenstoffdraht.

## Revendications

1. Dispositif pour la fusion et l'affinage de l'aluminium, du cuivre, du laiton, du plomb, du bronze et leurs alliages, ledit dispositif étant en mesure de chauffer, de fondre la matière première, d'affiner et de dégazer le métal fondu ainsi que d'extraire le métal fondu ; ledit dispositif comporte une cuve ou un creuset (1"), un appareil électromagnétique opportunément configuré, un tuyau de sortie (9), une enveloppe (10), un filtre (11) et un système d'alimentation électrique, ledit creuset (1") étant entouré dans sa partie basse par un aimant permanent creux (3") dans lequel trois paires d'électroaimants espacés horizontalement sont installées, lesdits électroaimants comportant des enroulements (4") de fil électrique qui enveloppent des noyaux composés de blocs rectangulaires (5') et réalisés en matière ferromagnétique ; lesdites paires d'électroaimants étant placées en position opposée et adjacente au creuset (1") ; lesdits électroaimants contenant les pôles du champ magnétique induit par les électroaimants ; le flux magnétique passant par le vide magnétique entre les paires de pôles et étant fermé par les circuits rectangulaires passant par l'aimant permanent creux (3") ; la forme des noyaux ferromagnétiques des électroaimants opposés étant conçue afin que le vide magnétique diminue du haut vers le bas ; ledit tuyau de sortie (9) étant réalisé en matière électroconductrice afin de décharger le métal fondu (2') ; l'entrée dudit tuyau (9) étant située à proximité d'une extrémité de la base du creuset (1") ; une enveloppe (10) étant prévue à l'extrémité du tuyau de sortie (9) du dispositif, qui contient un filtre en fibre ou en céramique remplaçable (11) assurant la filtration des inclusions coagulées ; un convoyeur à entonnoir (12") étant situé à côté de l'entrée du tuyau de sortie (9) ; le creuset (1") étant fermé par un couvercle (7') ; les enroulements (4") fonctionnant de manière indépendante et étant reliés à un réseau électrique à courant alternatif triphasé de plusieurs manières.

2. Dispositif selon la revendication 1, **caractérisé en ce que** la partie basse du creuset (1 ") est en forme de « V ».

3. Dispositif selon la revendication 1, **caractérisé en ce que** la partie basse du creuset (1 ") est en forme de « U » ou a une forme intermédiaire.

4. Dispositif selon la revendication 1, **caractérisé en ce que** la partie basse du creuset (1") a une forme entre la forme intermédiaire en « U » et la forme en « V ».

5. Dispositif selon la revendication 1, **caractérisé en ce que** l'appareil d'induction magnétique n'a que deux paires d'électroaimants.

6. Dispositif selon la revendication 1, **caractérisé en ce que** l'appareil d'induction magnétique a un nombre d'électroaimants correspondant à un multiple de trois.

7. Dispositif selon la revendication 1, **caractérisé en ce que** ledit creuset (1") est équipé d'un couvercle étanche à l'air (7') relié à un appareil pour la création du vide à l'intérieur du creuset (1").

8. Dispositif selon la revendication 1, **caractérisé en ce que** ledit tuyau (9) est réalisé en matière non-conductrice.

9. Dispositif selon la revendication 1, **caractérisé en ce que** l'entrée dudit tuyau (9) se situe dans n'importe quelle position du creuset (1").

10. Procédé de fusion et d'affinage par induction de l'aluminium, du cuivre, du laiton, du plomb, du bronze et leurs alliages utilisant le dispositif selon les revendications ci-dessus, comportant les phases ci-après:
- Chargement de la matière première solide et métallique froide (2) (déchets et lingots) dans le creuset (1") de l'appareil de fusion ;
- Chauffage et fusion par induction électromagnétique de la matière première solide (2) à l'intérieur du creuset (1") dans un système magnétique triphasé ; lesdits électroaimants produisant un champ magnétique horizontal mobile primaire, placé horizontalement entre les trois paires de pôles de matière ferromagnétique ; ledit champ magnétique induisant des courants tourbillonnants à l'intérieur de la matière première, ce qui crée un chauffage joule chauffant la matière première jusqu'à la température de fusion et des forces électromagnétiques produisant un flux magnéto-hydrodynamique tourbillonnant qui charge l'espace du métal fondu à l'intérieur du creuset (1") et permettant le déplacement de pièces de matière première ou l'écoulement du métal fondu à l'intérieur du creuset (1") ; la fusion de la matière première (2) et la création d'un flux unique étant possible en reliant chaque paire d'enroulements (4") à une phase différente (A, B et C) de l'alimentateur triphasé avec le maximum d'énergie électrique ;
- agitation tourbillonnante du métal fondu (2') par induction électromagnétique et affinage simultané du métal fondu (2') ; lesdits électroaimants produisant un champ magnétique horizontal mobile primaire, placé horizontalement entre les paires de pôles de matière ferromagnétique, ce qui induit des courants tourbillonnants à l'intérieur de la matière première et crée un chauffage joule dont l'intensité n'excède celle suffisante à ne compenser que la perte de chaleur dans l'environnement et à maintenir le métal à l'état liquide ainsi que des flux magnéto-hydrodynamiques par le transfert de masse à l'intérieur du métal fondu (2') à travers des forces électromagnétiques ; comme toutes les paires d'enroulements (4") enveloppant le creuset (1") sont reliées à la même phase de tension (alimentateur monophasé), mais que la polarité est différente, plusieurs circuits de courant se créent à l'intérieur du métal liquide autour du flux magnétique produit par chaque paire de pôles, ce qui entraîne la génération de plusieurs tourbillons à l'intérieur du métal fondu (2') ; cette agitation magnéto-hydrodynamique déclenchant le déplacement turbulent de l'hydrogène dissolu, de particules d'oxydes, des matières intermétalliques ainsi que d'autres inclusions non-électroconductrices à l'intérieur du métal fondu (2') ; lesdites inclusions se déplaçant à des vitesses différentes car elles dépendent de forces qui, à leur tour, sont fonction du volume et de la section transversale des inclusions et, en conséquence, des impacts entre elles sont possibles ; les particules solides (13) des inclusions absorbant sur leur surface les gaz dissolus à l'intérieur du métal fondu, notamment l'hydrogène (H₂), sous forme de petites bulles ; quand les particules (13) s'écoulent en tourbillon, elles entrent en collision les unes avec les autres, le contact entre les différentes particules (13) avec des bulles d'hydrogène sur la surface induisant des forces capillaires très fortes qui provoquent l'agglomération des particules (13) ; la taille de ces agglomérations étant fonction de la durée du traitement ;
- déchargement du métal (2') du creuset (1") par une pompe magnéto-hydrodynamique pour des traitements successifs ou des actions technologiques telles que la coulée continue ou périodique en reliant au moins une paire (4") d'enroulements du creuset (1") à une phase unique du système de tension triphasé ; le métal fondu (2'), poussé par les forces de Lorenz, étant obligé de s'écouler dans le tuyau (9) jusqu'à sa sortie afin d'être pompé à l'extérieur ; pendant l'écoulement d'évacuation du métal fondu (2') du creuset (1"), les agglomérations de particules d'oxydes coagulées (13) de matières intermétalliques et de gaz absorbées sur leur surface étant extraites par filtration mécanique grâce à un filtre en céramique projetée, en fibre de verre ou en fil de carbone (11).
